# EUROPEAN PATENT SPECIFICATION

(11) **EP 0 285 416 B1**
(45) Date of publication and mention of the grant of the patent: **18.11.1993**
(21) Application number: 88302884.7
(22) Date of filing: 30.03.1988
(51) Int. Cl.: F02M 37/22, F02M 31/12

(54) **Fuel filter assembly with heater**
Brennstoffilteraufbau mit einem Heizgerät
Assemblage de filtre de carburant avec un appareil de chauffage

(30) Priority: 30.03.1987 US 32834
(43) Date of publication of application: 05.10.1988
(73) Proprietor: PARKER HANNIFIN CORPORATION, Cleveland Ohio 44112 (US)
(72) Inventor: Church, John F., Modesto California 95350 (US); Wynne, Ken N., Denair California 95316 (US); Brooks, Darwin L., Modesto California 95355 (US); Stone, Walter H., Modesto California 95351 (US); Popoff, Peter, Modesto California 95356 (US)
(74) Representative: Purvis, William Michael Cameron

(56) References cited:
- EP-A- 0 152 042
- EP-A- 0 166 160
- EP-A- 0 193 264
- EP-A- 0 213 889
- GB-A- 2 028 921
- US-A- 3 674 043
- US-A- 4 387 691
- US-A- 4 406 785
- US-A- 4 596 224
- US-A- 4 608 161

## Description

The invention relates to a fuel filter used to filter and heat diesel fuel, the filter including heater means therein to elevate the temperature of the fuel to prevent buildup of residues and subsequent clogging of the fuel system.

The application of heater devices to diesel fuel filters has become accepted in the field because of the successful results obtained and the fact that much wider temperature ranges can be accommodated, which had previously introduced problems of clogging and plugging of the filters. While initially heaters were adapted to preexisting filter devices, it has now become commonplace to incorporate the heater as an integral part of the filter assembly and to achieve an efficient heat transfer with the fuel being passed to the filter element.

In particular, heater elements have been applied to the spin-on type of fuel filter wherein it is desired not only to obtain an efficient heat transfer relationship, but also to provide an efficient housing structure which can be incorporated safely into an engine compartment and still provide relatively free access for filter changes, maintenance and the like. Particular attention has been paid in such devices to the retention of a quantity of fuel in the filter head and/or the heater element so that when the filter element is exchanged there is not an excessive spillage of fuel. An alternate scheme is to provide means for efficiently draining the filter casing or cartridge prior to removal of the spin-on element so as to avoid or minimize the fuel spillage problem.

One device of this type is shown in Patent specification US-A-4 387 691 wherein a particular form of heater structure is employed in the filter head of a filter assembly which includes a spin-on type of filter element. Particular attention is paid in this disclosure to the routing of fluids through the heater structure and the filter medium so as to achieve an efficient and advantageous heat transfer relationship.

A similar arrangement of diesel fuel heater is shown in Patent specification US-A-4 406 785 wherein a plurality of PTC fuel heater elements are disposed on a conductive plate and located within the filter head of a fuel filter assembly to achieve the heat transfer relationship. In this form of apparatus, a circuitous path of travel for fluid flow through the heater element is provided which is about 360° in angular length and the heater is directly operative in the fuel path.

Still another form of prior art device is shown in Patent specification US-A-4 596 224 wherein a separate insulative housing is provided for the fuel heater, which housing is disposed between the filter head and the spin-on element and in which, again, a circuitous path of travel for the fluid flow is provided.

A more recent disclosure is made in Patent specification US-A-4 608 161 wherein a fuel heater structure is disposed in the filter head of the filter assembly. In this disclosure special structure is provided between the filter head and the spin-on filter element to displace fuel which might have been trapped in this location and which avoids significant fuel spillage upon element replacement. A vent duct is provided in the filter head. The preamble of claim corresponds to US-A-4 608 161
Patent specification EP-A-166160 discloses a filter which has a closed chamber at the head thereof with an outlet tube closed by a bimetal disc such that, when fuel is cold, no fuel can flow out of the outlet tube and resulting fuel pressure opens a non-return valve to allow fuel to flow into a filter housing to warm the fuel flowing in the filter media and assist flow thereof.

According to the invention there is provided a fuel filter assembly used to filter and heat diesel fuel and the like, comprising a filter head assembly supporting the filter assembly and interconnected with a fuel system of an engine, the filter head having an annular mounting surface thereon sealingly to receive a spin-on cylindrical element,
inlet and outlet ports in the filter head in fluid communication respectively with inlet and outlet chambers in the filter head,
an annular fuel heater in the inlet chamber effective to warm the fuel prior to passage thereof to the spin-on element,
a filter element in the spin-on element to separate out contaminants in the diesel fuel and to establish a flow path for diesel fuel between an outer peripheral fuel chamber and a central fuel chamber, the peripheral fuel chamber being in direct fluid communication with the inlet chamber in the filter head and the central fuel chamber being in direct communication with the outlet chamber in the filter head,
means releasably interconnecting the filter head and the spin-on element, and
an air vent port in the filter head,
characterised in that the fuel filter assembly is provided on the pressure side of a fuel supply pump,
the spin-on element has an annular mounting surface thereon sealingly to receive a collection bowl,
the air vent port in the filter head is externally connected to a fuel tank of the fuel system of the engine, and
the fuel filter assembly further comprises
means releasably interconnecting the spin-on element and the collection bowl, and
return check valve means in the filter head in fluid communication with the inlet chamber effective to release trapped air and to return fuel through the air vent port to the fuel tank of the fuel system of the engine to vent air and fuel from the inlet chamber after replacement of the spin-on cylindrical element.

Thus the invention can provide a heater located in the filter head of a filter assembly, which filter assembly includes a compound spin-on element comprising a casing for a filter element subassembly together with a removable threaded collection bowl. This can provide a convenient and safe mechanism for accommodating element exchange and also provide an efficient heat transfer relationship between the fuel heater and the diesel fuel passing through the filter apparatus.

The spin-on diesel fuel filter structure can incorporate a number of features in a die cast head structure for the assembly. These include among others, the heater element and in particular the non-return check valve in fluid communication with the inlet chamber in the filter head to release trapped air and to return fuel to the fuel system of the engine. The die cast head assembly can include not only inlet and outlet ports for interconnection with the fuel system of the vehicle, but also additional ports for the provision of a vent/calibration valve and a vacuum switch, both in fluid communication with an outlet chamber in the filter head.

The entire filter assembly can be supported by the filter head which may be attached at any convenient location in the engine compartment. Interconnection with the replacement spin-on element can be made by means of a threaded tube in the filter head which provides not only the mounting device but also a means for securing the fuel heater in the filter head and making electrical connection therewith. The fuel heater can be an annular can structure having a central mounting aperture to receive the threaded tube and comprising an upper insulating housing and a lower conductive plate which is in electrical connection with the threaded tube. A feed-through electrical contact and thermostat assembly can provide electrical power to a pair of PTC-type heater elements disposed on the conductive plate. A circuitous fuel path can be established so that a suitable heat transfer relationship is achieved with the heater elements.

The spin-on element may comprise the removable contaminant collection bowl threadedly attached to an adaptor member secured in the spin-on element casing. The casing in turn can be supported by a rigid top plate from the threaded tube and contain therewithin the filter element subassembly comprising an annular filter medium contained within upper and lower end caps and surrounding a central perforated supported tube. A filter drain assembly and water sensor probe can be included in the collection bowl for removal of water and other contaminants or for removal of fluid preparatory to exchange of the spin-on element.

The invention is diagrammatically illustrated by way of example in the accompanying drawings, in which:-
Figure 1 is a schematic drawing of a fuel filter according to the invention in a typical fuel supply and return system for a diesel engine and the like;
Figure 2 is a plan view of a fuel filter according to the invention;
Figure 3 is an elevation of a fuel filter according to the invention;
Figure 4 is a sectional view of a fuel filter according to the invention;
Figure 5 is a sectional view of a filter head portion of a fuel filter according to the invention;
Figure 6 is an underneath view of the filter head portion of Figure 5; and
Figure 7 is a sectional view of a return check valve used in a fuel filter according to the invention.

A fuel filter assembly 10 for filtering and heating fuel for diesel engines and the like comprises a filter head 12, a spin-on element 13 and a collection bowl 15. The filter head 12 is fastened to an engine or other suitable structure by a flange 16 and supports the entire fuel filter assembly 10. Preferably, the filter head 12 is a die cast head and includes therein an inlet port 18, an outlet port 19, and connected respectively thereto, an inlet chamber 21 and an outlet chamber 22. The filter head 12 is a generally circular structure having a flat annular mounting surface 24 at the lower portion thereof for sealing engagement by the spin-on element 13 and further includes an annular cavity 25 forming a part of the inlet chamber 21 and surrounding a circular portion of the outlet chamber 22. A heater assembly 26 is received in the cavity 25 of the inlet chamber 21 and is secured in place by a threaded tube 28, the bore of which communicates with the outlet chamber 22. The filter head 12 further comprises a vent port 29 and a vacuum switch port 30, both of which are in fluid communication with the outlet chamber 22 and a return check valve port 31 which is in fluid communication with the inlet chamber 21. Still further, the filter head 12 includes a heater port 32 which houses a feed through connector 34 and a thermostat 35 for supplying electrical power to the heater assembly 26.

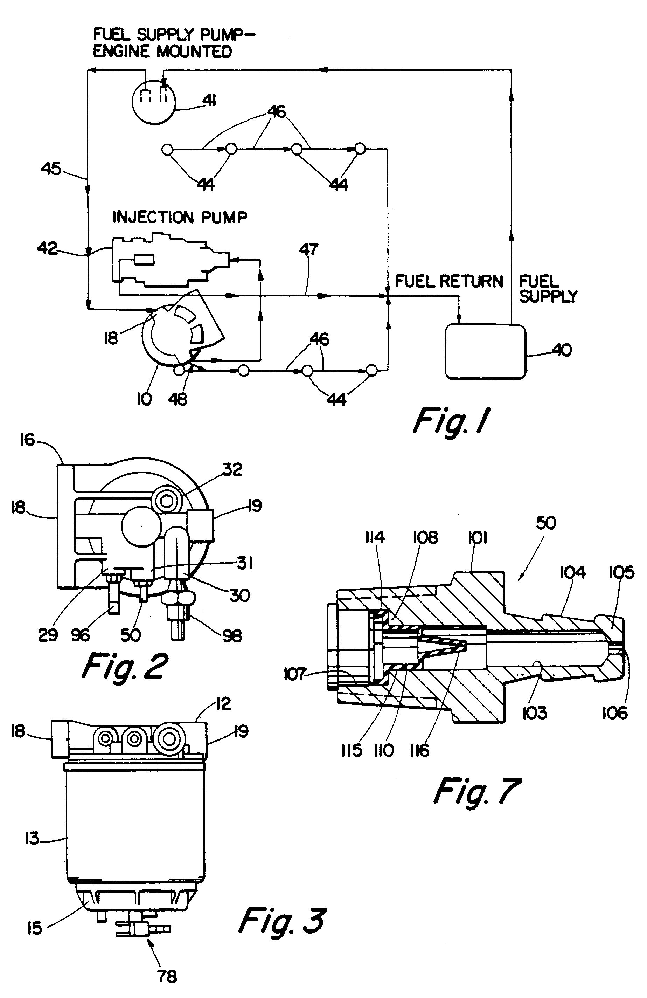

Referring to Figure 1, the fuel supply system for a typical diesel engine is depicted in schematic form as comprising a fuel tank 40, a fuel pump 41, the fuel filter assembly 10, an injection pump 42 and a plurality of injectors 44. Typical fuel lines are interconnected among the various components of the system with, for example, a fuel line 45 connected to the inlet port 18 of the filter assembly 10 and with various bleed lines 46 providing a fuel return path from each of the injectors 44 to the fuel tank 40. A bleed line 47 is also depicted as returning fuel from the injection pump 42 to the fuel tank 40 as a part of the fuel system. Not depicted in Figure 1 but understood as comprising a part of the fuel system, are pressure lines between the injection pump 42 and each of the injectors 44 which supply fuel to the diesel engine. A further bleed line 48 is shown as connected between the fuel filter assembly 10 and the fuel tank 40 by way of bleed lines such as 46, this being the line which is connected from a return check valve 50 connected at the return check valve port 31. In turn, the port 31 is connected to the inlet chamber 21 of the filter head 12 for venting air and fuel from the fuel filter assembly 10, which air is entrained in the diesel fuel or which is trapped therein upon change of the spin-on element 13.

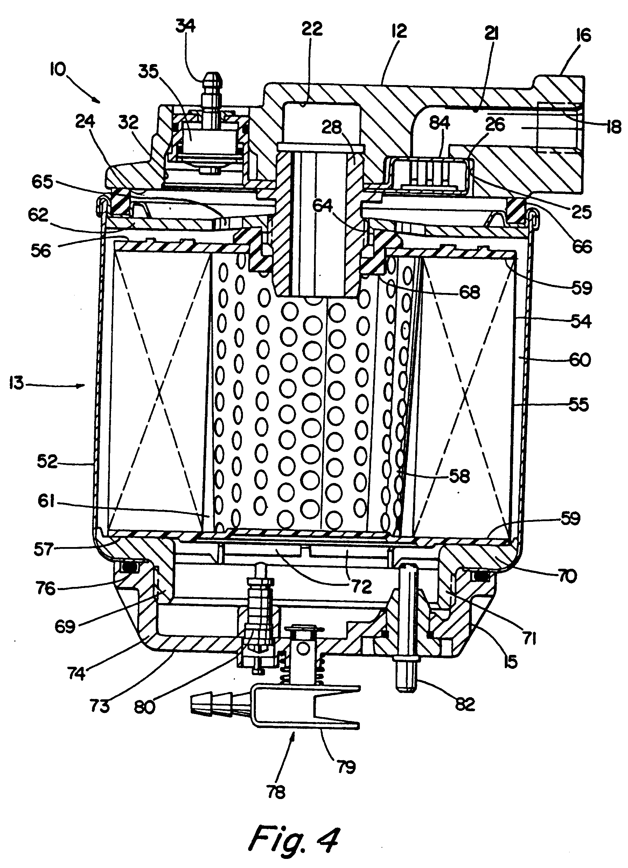

Referring now more particularly to the cross sectional view of Figure 4, the spin-on element 13 can be seen to comprise a cylindrical casing 52 which houses a filter element 54 for separating out contaminants and particulate matter in the fuel passing through the filter assembly. The filter element 54 comprises a filter medium 55 which is an annulus or loop of pleated paper element well known in the art or any other form of filter medium which would be suitable for separating out contaminants. The filter medium 55 is housed between an upper end cap 56 and a lower end cap 57 each of which comprise generally circular sheet metal plates for supporting the filter structure. Both of the end caps 56, 57 include circular ridges at the outer periphery thereof which extend inwardly of the filter medium 55 further to contain the structure. A perforated central support tube 58 is housed in the centre of the structure centrally of the filter medium 55 and all of the elements are secured together by means of potting compound closely adjacent the inner surfaces 59 of the upper and bottom end caps 56, 57 respectively. Therefore it is apparent that the filter medium 55 divides the spin-on element casing 52 into an outer peripheral fuel chamber 60 and a central fuel chamber 61.

The filter element 54 further includes a rigid top plate 62 which is generally of circular configuration having a central threaded aperture 64 and a plurality of openings 65 which surround the central aperture 64 and provide a path for fuel flow through the top plate 62. An annular gasket 66 is provided above the top plate 62 and is retained in place on the spin-on element 13 to provide sealed engagement with the mounting surface 24 of the filter head 12. The spin on element 13 further comprises an inner annular gasket 68 which is pressed in place in a central opening in the upper end cap 56 and retained in position by being trapped between the end cap 56 and the top plate 62. The gasket 68 provides a seal for the spin-on element 13 when in engagement with a smooth portion of the outer periphery of the threaded tube 28 as depicted in Figure 4. At the lower portion thereof, the spin-on element 13 further comprises an adaptor ring 69 which is a continuous ring which can lie flat and be sealed against a lower turned-in edge of the casing 52 by means of a polyester adhesive material. The adaptor ring 69 includes a plurality of radially oriented and circumferentially distributed upstanding ribs 70 and a depending annular threaded portion 71 for securement of the collection bowl 15. The upstanding ribs 70 provide fluid paths 72 therebetween for flow of contaminants and the like to the interior of the collection bowl 15.

The spin-on element 13 is fabricated by placement and adhesion of the adaptor ring 69 against the lower turned-in end of the casing 52. Thereafter, the filter element 54, as a subassembly, is positioned on the ribs 70 of the adaptor ring 69 thereby forming the fluid paths 72. The inner annular gasket 68 is placed in position in the central opening of the upper end cap 56 and the top plate 62 placed thereover with the material forming the central threaded aperture 64 pressed into an inner peripheral opening of the gasket 68. A thin metal plate covering the top plate 62 and welded in place thereto is then secured to the casing 52 by means of a rolled edge to secure the entire spin-on element assembly 13. The annular gasket 66 is positioned in an annular groove above the top plate 62 and is retained in place therein by several indented portions.

Referring now to the collection bowl 15 shown at the lower portion of the spin-on element 13 in Figure 4, this device comprises a cup-like member having a bottom wall 73 and a peripheral side wall 74. The side wall 74 has an internally threaded portion thereon and culminates at the upper edge in an annular groove in which an o-ring seal 76 is disposed for sealing engagement with the lower surface of the turned-in edge of the casing 52. The collection bowl 15 has a filter drain assembly 78 mounted in the lower portion thereof for disposing of water accumulated in the collection bowl and for draining of the entire spin-on element 13 upon replacement thereof. The filter drain assembly 78 comprises a pop-up valve 79 mounted in an opening in the bottom wall 73 of the collection bowl 15 as well as a vent valve 80 which can allow air to be drawn into the collection bowl 15 to relieve the partial vacuum created therein on opening of the pop-up valve 79. Further mounted in the lower wall 73 of the collection bowl 15 is a water sensor probe 82 which is an insulated electrical conductor which can achieve electrical continuity with fluid in the collection bowl when the fluid rises to a level to contact its exposed inner end.

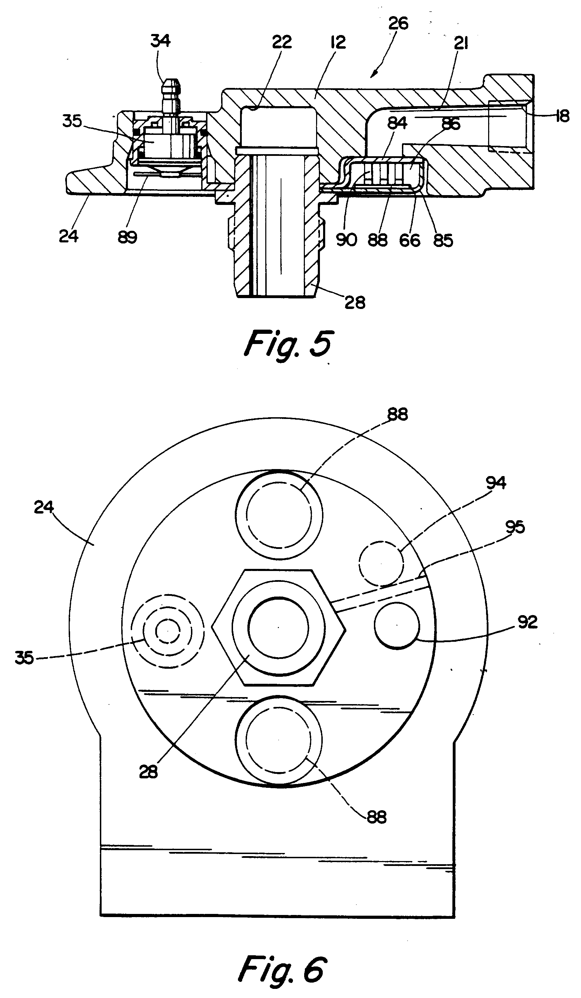

The heater assembly 26 is shown in more detail in Figures 5 and 6 as comprising an annular container formed with an upper insulating cover 84 and a lower conductive cup 85 which are joined at their margins and staked in place to provide a fuel heater enclosure 86 of generally annular configuration. The upper insulated cover 84 is depressed at a central portion thereof to form the inner margin of the annular enclosure 86 and is received on a central stud in the filter head 12 for securement in the inlet chamber 21. The lower conductive cup 85 is depressed at two locations about its lower wall, spaced 180^{o} apart for receipt of a pair of heater element discs 88 which are the devices which supply the thermal energy for warming of the diesel fuel passing through the heater assembly 26. The heater discs 88 are positive temperature coefficient (PTC) semiconductor elements which are commonly employed for similar purposes and which have a self-regulating thermal capability due to their relatively high positive temperature coefficient. This provides regulation of the electrical input and thus, the power output of the heater discs. A conductive plate of generally half-ring configuration is joined to the inner end of the feed through the connector 34 and the thermostat 35 to supply electrical power to one side of the heater discs 88 by means of plurality of spring fingers 90 depending from a conductive plate 89 at the location of each of the discs 88. As noted, the lower conductive cup 85 is in contact with the threaded tube 28 which in turn is threaded into the filter head 12, and with all of these devices made of highly conductive metal, this arrangement provides an efficient earth connection for the heater assembly 26.

The feed through connector 34 and the thermostat 35 are combined as a subassembly for insertion in an opening in the upper insulated cover 84, the latter being sealed by means of an o-ring engagement with the filter head 12 while the thermostat 35 itself is sealed on the interior with a further o-ring. As can be seen in Figure 6, the heater assembly 26 includes an outlet aperture 92 in the lower conductive cup 85, an inlet aperture 94 in the upper insulated cover 84 and a barrier comprising a radially positioned wall 95 extending downwardly from the upper cover 84 to the lower conductive cup 85 to provide a blockage in the annular fuel enclosure 86 in the heater assembly 26. Thus, fuel entering the inlet port 18 and the inlet chamber 21 of the filter head 12 is directed to the upper cover 84 of the heater assembly 26 and into the inlet opening 94, to be passed in a circuitous path of approximately 360^{o} over and around the heater elements discs 88 to the outlet opening 92 in the lower conductive cup 85. Fuel then flows to the space between the filter head 12 and the top plate 62 of the spin-on element 13 to pass through the openings 65 in the top plate 62 and into the outer peripheral fuel chamber 60. As fuel traverses the filter medium 55, moisture and other contaminants are collected on the outer surface thereof and drop to the bottom of the casing 52, thereafter to pass through the fluid paths 72 in the adaptor ring 69 and to be collected in the collection bowl 15. Fuel that traverses the filter medium 55 enters the perforated tube 58 and the central fuel chamber 61 and is delivered through the threaded tube 28 to the outlet chamber 22 and the outlet port 19 for delivery to a further part of the fuel system of the vehicle.

To replace the spin-on element 13 it is only necessary to actuate the filter pop up valve 79 of the filter drain assembly and remove not only contaminants from the collection bowl 15 but also fuel that may be entrained in the filter medium 55, the peripheral fuel chamber 60 and the cavities located above the spin-on element 13. The element 13 may then be unthreaded from the filter head 12 and removed therefrom for replacement purposes. During this procedure, the collection bowl 15 is unthreaded from the spin-on element 13, a new spin-on element introduced to which the collection bowl 15 is threaded and secured in position and the entire new spin-on element 13 attached to the threaded tube 28 to be secured to the filter head 12. At this point a vacuum could be applied to a vent valve 96 which is merely a check valve threaded into the vent port 29 to draw fuel throughout the filter assembly until the outlet chamber 22 is filled. Alternatively a fuel supply pump such as the pump 41 could be actuated to force fluid through the filter assembly until it was again filled. In this procedure air that has been introduced into the assembly during replacement of the spin-on element 13 will tend to rise to the top of the inlet chamber 21 and air that is entrained in the diesel fuel will similarly rise to the top of the inlet chamber 21. At this location the return check valve 50 will become operative to vent air from the chamber and fluid as well to the return line 48 to be returned eventually to the fuel tank 40. In this manner a considerable amount of air which had previously been trapped in the fuel filter assembly will be expunged therefrom to provide more reliable operating characteristics.

Referring to the Figure 7, the return check valve 50 comprises a metal body member 101 having a hexagonal portion thereon, an externally threaded inner end, and a central axial stepped bore 103 therein. The outer end portion of the body 101 is a reduced tubular part having barbs 104 thereon and a closure member 105 at the outer end to provide a fitting for push-on tubing or the like to serve as a drain line for return of fuel to a fuel tank 40. The closure member 105 includes a small central orifice 106 therein which is typically of 1 mm (0.040 inches) in diameter and which serves as a device to restrict flow of fuel through the return check valve 50. An inner end 107 of the bore 103 is enlarged and the bore 103 is stepped in several locations toward the outlet end at the orifice 106. Seated in the bore 103, against a shoulder 108 is a check valve 110 which is a single piece elastomeric part in the form of a duck-bill valve. The check valve 110 comprises a circular entrance ring 114 of relatively thick proportions, a tubular portion 115 and a pair of lips 116 in the shape of a duck's bill which provides a check valve function for the valve 110. The lips 116 taper inwardly from the tubular portion 115 and are closely adjacent one another at their downstream end to provide a seal against fluid flow in the reverse direction, but are sufficiently flexible to be distended slightly upon fluid flow from the inlet of the check valve 50 toward the orifice 106 to provide very little resistance to such fluid flow. Similarly, air that is trapped within the inlet chamber 21 of the filter head 12, passes with the fluid through the check valve 50 to the fuel tank 40. The relatively small size of the outlet orifice 106 in the return check valve 50 ensures that while a substantially continuous flow of fluid is provided such flow will be restricted to a relatively minimal amount sufficient to ensure clearance of entrapped air in the filter head 12. Since the return check valve 50 is connected from the inlet chamber 21 to the fuel tank 40 it will be noted that it is in bypass connection of the filter medium 55 and does provide some relief for excessive pressure differentials exhibited at the filter medium 55. A vacuum switch 98 of conventional variety is threaded in the vacuum switch port 30 of the filter head 12 in fluid communication with the outlet port 19 so as to provide an indication of the pressure level in this chamber and a signal of clogging or contamination of the filter medium 55 so that replacement can be performed as necessary.

## Claims

1. A fuel filter assembly used to filter and heat diesel fuel and the like, comprising
a filter head (12) assembly supporting the filter assembly and interconnected with a fuel system of an engine, the filter head (12) having an annular mounting surface thereon sealingly to receive a spin-on cylindrical element (13),
inlet (18) and outlet (19) ports in the filter head (12) in fluid communication respectively with inlet (21) and outlet (22) chambers in the filter head,
an annular fuel heater (26) in the inlet chamber (21) effective to warm the fuel prior to passage thereof to the spin-on element,
a filter element (54) in the spin-on element to separate out contaminants in the diesel fuel and to establish a flow path for diesel fuel between an outer peripheral fuel chamber (60) and a central fuel chamber (61), the peripheral fuel chamber (60) being in direct fluid communication with the inlet chamber (21) in the filter head (12) and the central fuel chamber (61) being in direct communication with the outlet chamber (22) in the filter head,
means releasably interconnecting the filter head (12) and
the spin-on element (13), and
an air vent port (31) in the filter head,
characterised in that the fuel filter assembly is provided on the pressure side of a fuel supply pump (41),
the spin-on element has an annular mounting surface thereon sealingly to receive a collection bowl (15),
the air vent port (31) in the filter head is externally connected (48) to a fuel tank (40) of the fuel system of the engine, and
the fuel filter assembly further comprises
means releasably interconnecting the spin-on element (13) and the collection bowl (15), and
return check valve means (50) in the filter head (12) in fluid communication with the inlet chamber (21) effective to release trapped air and to return fuel through the air vent port (31) to the fuel tank (40) of the fuel system of the engine to vent air and fuel from the inlet chamber (21) after replacement of the spin-on cylindrical element.

2. A fuel filter according to claim 1, wherein the return check valve means (50) comprises an elastomeric duck-bill check valve (110) supported in a body member (101) threaded into a port (31) communicating with the inlet chamber (21), the valve having a restricted orifice (106) therein to limit the flow of fuel in bypass of the filter element.

3. A fuel filter according to claim 2, wherein the means releasably interconnecting the spin-on element (13) and the filter head (12) is a threaded tube (28) secured in the filter head (12) and securing the heater element in electrical engagement with the filter head.

4. A fuel filter according to claim 3, wherein the threaded tube (28) is in fluid communication with the outlet chamber (22) in the filter head and establishes a path for fluid flow from the spin-on element to the outlet chamber.

5. A fuel filter according to claim 4, wherein the filter head further comprises a vent port (29) and a vacuum switch port (30) in fluid communication with the outlet chamber (22) in the filter head, the vent port (29) receiving a vent valve therein to vent and fill the outlet chamber (22) and the vacuum switch port (30) providing access to the outlet chamber to monitor the vacuum pressure in the outlet chamber.

## Patentansprüche

1. Kraftstoff-Filteranordnung, die zum Filtern und Erhitzen von Dieselkraftstoff und dergleichen verwendet werden kann, mit
einer Filterkopfanordnung (12), die die Filteranordnung trägt und mit einem Kraftstoffsystem eines Motors verbunden ist, wobei der Filterkopf (12) auf sich eine ringförmige Befestigungsfläche aufweist, um abdichtend ein eindrehbares zylinderförmiges Element (13) aufzunehmen, Einlaß- (18) und Auslaßöffnungen (19) in dem Filterkopf (12), die jeweils mit Einlaß- (21) und Auslaßkammern (22) in dem Filterkopf in Fluidverbindung stehen,
einem ringförmigen Kraftstoffheizelement (26) in der Einlaßkammer (21), das dahingehend wirkt, den Kraftstoff zu erwärmen, bevor er zu dem eindrehbaren Element strömt,
einem Filterelement (54) in dem eindrehbaren Element, um Schmutzstoffe in dem Dieselkraftstoff auszusondern, und um einen Strömungsweg für den Dieselkraftstoff zwischen einer äußeren umfangsseitigen Kraftstoffkammer (60) und einer zentralen Kraftstoffkammer (61) zu errichten,
wobei die umfangsseitige Kraftstoffkammer (60) in direkter Fluidverbindung mit der Einlaßkammer (21) in dem Filterkopf (12) steht und die zentrale Kraftstoffkammer (61) in direkter Verbindung mit der Auslaßkammer (22) in dem Filterkopf steht,
Mitteln, die den Filterkopf (12) und das eindrehbare Element (13) lösbar miteinander verbinden, und
einer Entlüftungsöffnung (31) in dem Filterkopf,
dadurch gekennzeichnet, daß die Kraftstoff-Filteranordnung auf der Druckseite einer Kraftstoffzufuhrpumpe (41) vorgesehen ist,
daß das eindrehbare Element eine ringförmige Befestigungsfläche aufweist, um eine Sammelschale (15) abdichtend aufnehmen zu können,
daß die Entlüftungsöffnung (31) in dem Filterkopf außen (48) mit einem Kraftstofftank (40) des Kraftstoffsystems des Motors verbunden ist, und daß die Kraftstoff-Filteranordnung desweiteren umfaßt:
Mittel, die das eindrehbare Element (13) und die Sammelschale (15) lösbar miteinander verbinden, und
Rückflußsperrventilmittel (50) in dem Filterkopf (12), die mit der Einlaßkammer (21) in Fluidverbindung stehen und dahingehend wirken, eingeschlossene Luft herauszulassen und Kraftstoff durch die Entlüftungsöffnung (31) zu dem Kraftstofftank (40) des Kraftstoffsystems des Motors zurückzuleiten, um Luft und Kraftstoff aus der Einlaßkammer (21) abzuleiten, nachdem das eindrehbare zylinderförmige Element ausgewechselt worden ist.

2. Kraftstoff-Filter nach Anspruch 1, bei dem das Rückflußsperrventilmittel (50) ein elastisches entenschnabelförmiges Rückschlagventil (110) umfaßt, das in einem Körperelement (101) gehalten wird, das in eine Öffnung (31) eingeschraubt ist, die mit der Einlaßkammer (21) in Verbindung steht, wobei das Ventil in sich eine eingegrenzte Öffnung (106) aufweist, um den Fluß des Kraftstoffs in Umgehung des Filterelements zu begrenzen.

3. Kraftstoff-Filter nach Anspruch 2, bei dem das Mittel, das das eindrehbare Element (13) und den Filterkopf (12) lösbar miteinander verbindet, ein Gewinderohr (28) ist, das in dem Filterkopf (12) befestigt ist und das Heizelement in elektrischer Verbindung mit dem Filterkopf festhält.

4. Kraftstoff-Filter nach Anspruch 3, bei dem das Gewinderohr (28) in Fluidverbindung mit der Auslaßkammer (22) in dem Filterkopf steht und einen Weg für den Fluidstrom von dem eindrehbaren Element zu der Auslaßkammer errichtet.

5. Kraftstoff-Filter nach Anspruch 4, bei dem der Filterkopf desweiteren eine Lüftungsöffnung (29) und eine Vakuumschalteröffnung (30) umfaßt, die in Fluidverbindung mit der Auslaßkammer (22) in dem Filterkopf stehen, wobei die Lüftungsöffnung (29) in sich ein Entlüftungsventil aufnimmt, um die Auslaßkammer (22) zu entlüften und zu füllen, und die Vakuumschalteröffnung (30) einen Zugang zu der Auslaßöffnung vorsieht, damit der Vakuumdruck in der Auslaßkammer überwacht werden kann.

## Revendications

1. Ensemble filtre de carburant à utiliser pour filtrer et chauffer du carburant gazole et similaire, comportant
- un ensemble tête de filtrage (12) supportant l'ensemble filtre et interconnecté avec un système de carburant d'un moteur, la tête de filtrage (12) ayant une surface de montage annulaire agencée de manière étanche pour recevoir un élément cylindrique à fixer par rotation (13),
- des orifices d'entrée (18) et de sortie (19) dans la tête de filtrage (12) permettant respectivement le passage d'un fluide dans les chambres d'entrée (21) et de sortie (22) de la tête de filtrage,
- un dispositif annulaire de chauffage de carburant (26) étant prévu dans la chambre d'entrée (21) pour chauffer le carburant avant son passage dans l'élément à fixer par rotation,
- un élément de filtrage (54) dans l'élément à fixer par rotation pour séparer les impuretés dans le carburant gazole et pour établir un passage de fluide pour le carburant gazole entre la chambre de carburant périphérique extérieure (60) et une chambre de carburant centrale (61), la chambre de carburant périphérique (60) étant en communication fluide directe avec la chambre d'entrée (21) dans la tête de filtrage (12) et la chambre de carburant centrale (61) étant en communication directe avec la chambre de sortie (22) de la tête de filtrage,
- des moyens pour interconnecter de manière démontable la tête de filtrage (12) et l'élément à fixer par rotation (13), et
- un orifice d'évent d'air (31) dans la tête de filtrage,
caractérisé en ce que l'ensemble filtre de carburant est prévu sur le côté en pression d'une pompe d'alimentation en carburant (41), l'élément à fixer par rotation a une surface de montage annulaire agencée de manière étanche pour recevoir une cuvette de collecte (15), l'orifice d'évent d'air (31) dans la tête de filtrage est connecté extérieurement (48) au réservoir de carburant (40) du système de carburant du moteur, et l'ensemble filtre de carburant comportant en outre des moyens pour connecter de manière démontable l'élément à fixer par rotation (13) et la cuvette de collecte (15), et des moyens de soupape de retenue de retour (50) dans la tête de filtrage (12) étant en communication fluide avec la chambre d'entrée (21) pour libérer l'air emprisonné et pour renvoyer le carburant à travers l'orifice d'évent d'air (31) jusqu'au réservoir de carburant (40) du système de carburant du moteur pour décharger l'air et le carburant à partir de la chambre d'entrée (21) après le remplacement de l'élément cylindrique à fixer par rotation.

2. Filtre de carburant selon la revendication 1, caractérisé en ce que les moyens de soupape de retenue de retour (50) comportent une soupape de retenue en élastomère en forme de bec de canard (110) montée dans un corps (101) glissée dans un orifice (31) communiquant avec la chambre d'entrée (21), la soupape ayant un orifice réduit (106) pour limiter le débit de carburant dans le conduit de dérivation de l'élément de filtrage.

3. Filtre de carburant selon la revendication 2, caractérisé en ce que les moyens interconnectant de manière démontable l'élément à fixer par rotation (13) et la tête de filtrage (12) sont un tube fileté (28) fixé dans la tête de filtrage (12) et maintenant l'élément de chauffage en contact électrique avec la tête de filtrage.

4. Filtre de carburant selon la revendication 3, caractérisé en ce que le tube fileté (28) communique de manière fluide avec la chambre de sortie (22) dans la tête de filtrage et établit un passage pour un courant de fluide à partir de l'élément à fixer par rotation jusqu'à la chambre de sortie.

5. Filtre de carburant selon la revendication 4, caractérisé en ce que la tête de filtrage comporte en outre une ouverture d'évent (29) et un orifice interrupteur de vide (30) en communication fluide avec la chambre de sortie (22) de la tête de filtrage, l'orifice d'évent (29) incluant une valve d'évent pour ventiler et remplir la chambre de sortie (22) et l'orifice interrupteur de vide (30) procurant un accès à la chambre de sortie pour commander la pression du vide dans la chambre de sortie.
